# EUROPÄISCHE PATENTSCHRIFT

(11) **EP 2 718 112 B1**
(45) Veröffentlichungstag und Bekanntmachung des Hinweises auf die Patenterteilung: **16.12.2015**
(21) Anmeldenummer: 12728986.6
(22) Anmeldetag: 11.06.2012
(51) Int. Cl.: B42D 15/00, B29C 47/00, B32B 27/10, B32B 3/18, B42D 25/29, B29C 47/04, B32B 27/08, B42D 25/355

(54) **BLATTDOKUMENT MIT EINEM TRANSLUZENTEN ODER TRANSPARENTEN BEREICH**
SHEET DOCUMENT WITH A TRANSLUCENT OR TRANSPARENT REGION
DOCUMENT EN FORME DE FEUILLE, COMPORTANT UNE ZONE TRANSLUCIDE OU TRANSPARENTE

(30) Priorität: 10.06.2011 DE 102011103995
(43) Veröffentlichungstag der Anmeldung: 16.04.2014
(73) Patentinhaber: Giesecke & Devrient GmbH, 81677 München (DE)
(72) Erfinder: LIEBLER, Ralf, 83727 Schliersee (DE); RIEDL, Josef, 85395 Attenkirchen (DE)
(86) Internationale Anmeldenummer: PCT/EP2012/002464
(87) Internationale Veröffentlichungsnummer: WO 2012/167949

(56) Entgegenhaltungen:
- WO-A2-2009/153056
- US-A1- 2007 194 934

## Beschreibung

Die Erfindung betrifft dünne folienartige Körper, die zumindest einen opaken und einen transparenten oder transluzenten Bereich aufweisen. Insbesondere betrifft die Erfindung Blattdokumente in Form von Banknoten oder Ausweisen aller Art, die mit Sicherheitselementen zum Nachweis der Echtheit versehen sind und die ein Fenster oder einen transluzenten Bereich aufweisen.

Aus der WO 2009/153056 A2 ist der Vorschlag bekannt, Datenträger mittels koextrudierter Kunststoffolien aufzubauen, die aus nebeneinander ausgebildeten Streifen mit unterschiedlichen Materialeigenschaften bestehen. Die Streifen können insbesondere abwechselnd opak und transparent ausgeführt sein. Durch kreuzweises Übereinanderanordnen zweier solcher Folien lassen sich Fenster in Form transparenter Bereiche sowie Bereiche mit unterschiedlichen Opazitäten erzeugen. Für die Dicke der herstellbaren Datenträger ist eine untere Grenze von 80 µm angegeben. Als mögliche Verwendung für den Datenträger ist die Einbindung in ein elektronisches Identifikationsbuch vorgeschlagen. Die Schrift regt auch allgemein an, die Folien mit Sicherheitsmerkmalen zu versehen. Einzelheiten hierzu führt sie aber nicht aus. Insbesondere geht sie nicht auf die mögliche Bedeutung eines Fensters als Sicherheitselement ein. Aus der Schrift ist weiterhin der Vorschlag bekannt, die Oberfläche eines mittels der beschriebenen Kunststoffolien aufgebauten Kartenkörpers so zu bedrucken, dass durch die Bedruckung auf Fensterbereiche entstehen. Lage und Größe dieser Fensterbereiche sind unabhängig von der Lage der Streifen in der der Kunststoffolie. Bei sehr dünnen Datenträgern mit Dicken von unter 110 µm ergibt sich bei der Umsetzung der bekannte Lösung allerdings das Problem, dass tief opake Streifen zunehmend schwerer herstellbar sind; der Kontrast zwischen transparent und opak wird entsprechend zunehmend geringer. Für sehr dünne Datenträger ist es deshalb zur Ausbildung von Fenstern regelmäßig sinnvoller, eine vollständig transparente Kernfolie zu bedrucken und durch Druckaussparungen Fenster zu erzeugen, als vergleichsweise teurere coextrudierte Kunststoffolien mit Streifen einzusetzen und diese zu bedrucken.

Aufgabe der Erfindung ist es Körper, deren Körper unter der in der vorgenannten WO 2009/153056 A2 behandelten Dicke liegt, mit einem Fenster oder einem transluzenten Bereich auszustatten, der sich deutlich von dem übrigen Teil des Körpers abhebt.

Diese Aufgabe wird gelöst durch ein Blattdokument mit den Merkmalen des Anspruchs 1. Das erfindungsgemäße Blattdokument zeichnet sich dadurch aus, dass es einerseits einen transparenten oder transluzenten Bereich aufweist, in dem ein Fenster ausbildet ist, und andererseits außerhalb des transparenten bzw. transluzenten Bereiches eine hohe Opazität besitzt, wodurch der transparente bzw. transluzente Bereich deutlich von den übrigen Teilen des Blattdokuments abgegrenzt und entsprechend deutlich wahrnehmbar ist. Durch den klar definierten Übergang zwischen transparenten bzw. transluzenten und opaken Bereichen wird es möglich, den Übergang gezielt für Prüfungszwecke heranzuziehen. Durch die klare Trennung ergeben sich zudem neue Möglichkeiten in der Anordnung und in der Ausbildung von Sicherheitselementen.

Die Erfindung beruht auf der Erkenntnis, dass durch gezielte Überlagerung eines Druckes und eines opaken Streifens eine hohe Opazität erzielt werden kann, die deutlich zu einem angrenzenden transparenten oder transluzenten Bereich kontrastiert. Erfindungsgemäß wir dabei über einen transparenten Streifen ein Druckmuster aufgebracht, das eine Ausnehmung aufweist, die ein Fenster bildet. Zumindest ein Rand des Fensters ist dabei genau fluchtend mit einer darunterliegenden Grenzlinie zwischen einem transparenten/transluzenten Streifen und einem opaken Streifen ausgeführt.

Das erfindungsgemäße Blattdokument ist in vorteilhafter Weise ohne besonderen Zusatzaufwand gut herstellbar. In bevorzugter Ausführung wird für das Blattdokument genau eine Streifenverbundschicht verwendet. Durch Auswahl geeigneter Materialien für die einzelnen Streifen der Streifenverbundschicht lässt sich auf der Oberfläche des Blattdokuments eine Vielzahl von Materialkombinationen realisieren. Dabei können insbesondere auch schwierige Materialien verarbeitet werden. Weiter gestattet es die Verwendung von Streifenverbundfolien in vorteilhafter Weise neben Fenstern auch taktile Merkmale zu erzeugen, indem in opaken Streifen Aussparungen vorgesehen werden. Ein Ausführungsbeispiel der Erfindung wird nachfolgend unter Bezugnahme auf die Zeichnung näher erläutert.

In einer vorteilhaften Ausgestaltung weist das erfindungsgemäße Blattdokument wenigstens eine vollflächig aufgebrachte transparente Zwischenschicht auf, die ein Sicherheitsmerkmal trägt, das in dem Fenster sichtbar wird.

Es zeigen:
- Fig. 1: eine Schrägaufsicht auf eine Ausführungsform eines Blattdokuments,
- Fig. 2: einen Querschnitt durch eine Ausführungsform eines Blattdokuments,
- Fig. 3: einen Querschnitt durch eine reduzierte Ausführungsform eines Blattdokuments,
- Fig. 4: einen Querschnitt durch eine alternative Ausführungsform eines Blattdokuments,
- Fig. 5: einen Querschnitt durch eine Ausführungsform eines Blattdokuments, das ein taktiles Merkmal aufweist und
- Fig. 6: den Grundaufbau einer Anordnung zur Streckung einer Streifenverbundschicht.

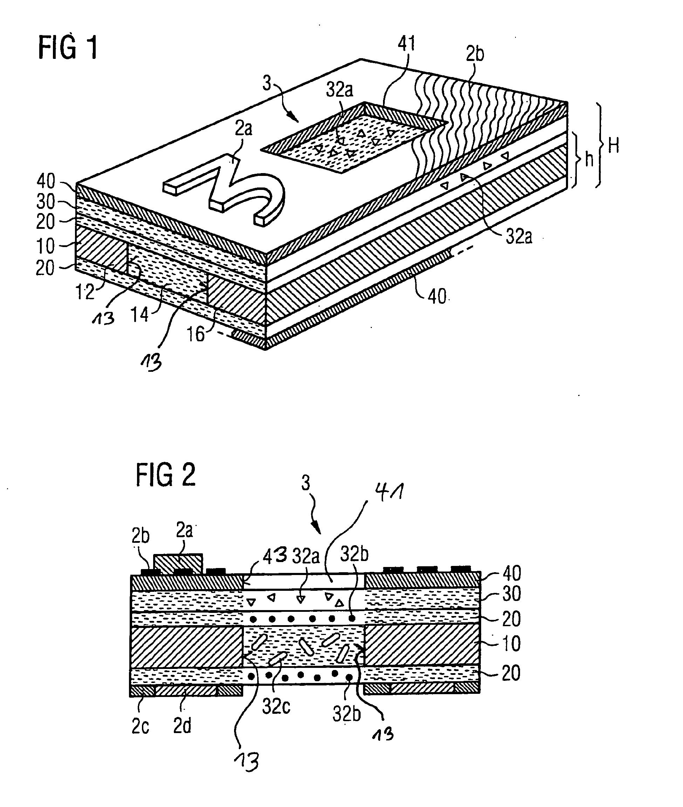

Fig. 1 veranschaulicht in einer perspektivischen Schrägaufsicht eine Ausführungsform eines erfindungsgemäßen Blattdokuments 1. Bei dem Blattdokument 1 kann es sich um eine Banknote, eine Urkunde, ein Ausweisdokument, eine Seite zur Befestigung in einem Dokumenten- oder Paßbuch oder ein anderes blattartiges Wertdokument handeln, das eine besonders schützenswerte Information trägt und durch Sicherheitselemente gegen Nachmachen geschützt ist.

Das Blattdokument 1 basiert auf mindestens einer Grundschicht aus Kunststoff, Papier oder einer Mischung von beiden, die zunächst in Form einer Folie oder eines Bogens bereitgestellt wird. Auf die Grundschicht ist regelmäßig mindestens eine weitere Schicht aufgebracht

In der in Fig. 1 veranschaulichten Ausführungsform besteht das Blattdokument 1 beispielhaft aus fünf Schichten, nämlich einer Streifenverbundschicht 10, zwei die Streifenverbundschicht 10 einfassenden Überschichten 20, einer Zwischenschicht 30 und einer Farbannahmeschicht 40. Die einzelnen Schichten sind in Fig. 1 zudem nicht maßstabsgerecht gezeigt. Die Gesamthöhe H des durch die Schichten 10, 20, 30, 40 gebildeten Schichtaufbaus liegt in der Regel zwischen 10 und 130 µm.

Die Schichten 10, 20, 30, 40 können mit Druckmustern 2a, 2b und/ oder mit Sicherheitselementen 32a, 32b versehen sein. Im Beispiel der Fig. 1 ist auf die Farbannahmeschicht 40 etwa ein erstes Druckmuster 2a in Form einer alphanumerischen Zeichenkombination sowie ein zweites Druckmuster 2b in Gestalt eines angedeuteten Guillochenmusters aufgebracht. Wie in Fig. 2 angedeutet überlagern sich die Druckmuster 2a, 2b dabei zumindest teilweise, wobei im Beispiel der Fig. 1 das Druckmuster 2a über dem Druckmuster 2b liegt. Gleichartig oder ähnlich aufgebaute Druckmuster 2c, 2d mit gleichem oder anderen Inhalt wie die Druckmuster 2a, 2b sind typischerweise auch auf der gegenüberliegenden, in der Darstellung in Fig. 1 rückseitigen Oberfläche des Blattdokuments 1 ausgebildet. Wie in Fig. 2 angedeutet, kann das Druckmuster 2c, 2d dabei auch aus sich ergänzenden Teildruckmustern bestehen und direkt auf die Überschicht 20 aufgebracht sein. Ohne weiteres kann im übrigen, wie in Fig. 1 angedeutet, auch auf der rückseitigen Oberfläche eine Farbannahmeschicht 40 vorgesehen sein. Das Druckmuster 2c, 2d wird dann auf diese aufgebracht.

Das Blattdokument 1 weist durch entsprechende Gestaltung seiner Schichten 10, 20, 30, 40 zumindest ein Fenster 3 in Form eines transparenten oder transluzenten Bereichs auf. Das Fenster 3 wird durch Zusammenwirken eines transparenten oder transluzenten Bereichs der Streifenverbundschicht 10 mit einer Ausnehmung 41 oder einem transparenten Bereich in der Farbannahmeschicht 40 und/ oder einer entsprechenden Gestaltung der Druckmuster 2a, 2b bzw. 2c, 2d gebildet.

Grundschicht des in Fig. 1 dargestellten Blattdokuments 1 ist eine 10 bis 110 µm dicke Streifenverbundschicht 10, die als durch Coextrusion hergestellte Kunststoffschicht ausgeführt ist. In der Streifenverbundschicht 10 sind Streifen 12,14,16 aus verschiedenen Materialien so ausgebildet, dass sie an lateralen Grenzflächen 13 aneinanderstoßen und in der Fläche der Streifenverbundschicht 10 nebeneinander liegen; an der Oberfläche der Streifenverbundschicht 10 zeigen sich die Grenzflächen 13 als entsprechende Grenzlinien. In der Ausführungsform nach Fig. 1 besteht die Streifenverbundschicht 10 aus drei Streifen 12,14,16 aus verschiedenen Materialien, wobei ein mittiger Streifen 14 aus einem transparenten oder transluzenten Material gebildet wird, während die an den Längsseiten jeweils angrenzenden Streifen 12 und 16 aus einem opaken Material bestehen.

Die Streifen 12,14,16 können sich auch in anderen Materialeigenschaften unterscheiden, z.B. können einzelne oder mehrere Streifen mechanisch besonderes stabil ausgebildet sein. Dabei kann auch ggf. gezielt in Kauf genommen werden, daß eine bestimmte Optimierung eine Streifens 12,14,16 im Hinblick auf eine besondere Materialeigenschaft zu einer Beeinträchtigung einer anderen Materialeigenschaft führt. Beispielsweise kann einer verbesserte mechanische Stabilität zu einer schlechteren direkten Bedruckbarkeit führen.

Die Breite der Streifen 12,14,16 ist im Beispiel der Fig. 1 etwa gleich, kann jedoch auch ganz unterschiedlich gestaltet sein. Auch kann die Streifenverbundschicht 10 in einem Blattdokument 1 ohne weiteres mehr als drei Streifen aufweisen oder nur aus genau zwei Streifen bestehen. Die Streifen 12,14, 16 der Streifenverbundschicht 10 können sich außer durch ihre Opazität ferner auch in anderen Eigenschaften unterscheiden, etwa in ihrer Eignung zur Verbindung mit einem aufgebrachten anderen Material oder durch die Beimischung von Zusatzstoffen. Unter anderem könnten in einen oder mehrere der Streifen 12,14,16 Zusatzstoffe eingebracht sein, die als Echtheitsmerkmale oder Sicherheitselemente dienen, wie z.B. fluoreszierende oder metallische Partikel oder Melierfasern. Besonders in den transparenten Streifen 14 können Sicherheitselemente 32c eingebracht sein, die durch das Fenster 3 erkennbar sind.

Als Ausgangskunststoffe für die Streifenverbundschicht 10 bzw. für die einzelnen Streifen 12,14,16 kommen alle extrudierbaren Polymere in Frage, wie Polyester, Polyolefine, Polyamide, PVC, Polystyrol, Polymethylmethacrylate, Polycarbonat, Copolymere oder Mischungen davon. Die Herstellung von Verbundstreifenfolien durch Coextrusion ist an sich bekannt und z.B. in der WO 2007/118828 A1 beschrieben.

Die Überschichten 20 stabilisieren die Streifenverbundschicht 10. Zweckmäßig sind sie als dünne, transparente Schichten ausgebildet und werden im Zuge der Coextrusion zusammen mit der Streifenverbundschicht 10 hergestellt. Die Überschichten 20 können einzeln oder beide mit Sicherheitselementen 32b versehen sein, z.B. fluoreszierende oder metallische Partikel, Melierfasern oder Pigmente. Die Überschichten 20 sind grundsätzlich optionale Schichten und können entsprechend auch entfallen. Die weiteren Schichtaufbauten erfolgen dann direkt auf die Streifenverbundschicht 10. Es können auch Sicherheitsfäden in die Überschichten 20 eingebettet werden, z.B. während des Coextrusionsvorgangs, bevorzugt in den Bereichen, in denen die Streifenverbundschicht 10 transparent ist.

Zweckmäßig beinhaltet das Blattdokument 1 genau eine Streifenverbundschicht 10; in einer Variante können auch mehrere gleichartig gestaltete Streifenverbundschichten 10 deckungsgleich übereinander liegen und verbunden sein.

Die Zwischenschicht 30 ist eine vorzugsweise transparente Kunststoffolie, die z.B. durch Laminieren oder durch Verkleben nach dem Coextrudieren zweckmäßig vollflächig auf die Streifenverbundschicht 10 aufgebracht wird; sie dient insbesondere als Träger für Sicherheitselemente 32a. Die Sicherheitselemente 32a können z.B. fluoreszierende oder metallische Partikel, Transferstreifen, Sicherheitsfäden, Melierfasern oder Pigmente sein. Sie können, wie in Fig. 2 angedeutet, in die Zwischenschicht 30 eingearbeitet oder auch z.B. drucktechnisch auf die Ober- oder die Unterseite der Zwischenschicht aufgebracht sein.

In einer vorteilhaften Ausführung sind die Sicherheitselemente 32a für das menschliche Auge unmittelbar wahrnehmbare Elemente und deshalb in der Zwischenschicht 30 in einem solchen Bereich oder in solchen Bereichen ausgebildet, die später in einer Ausnehmung 41 und vorzugsweise über einem transparenten Streifen 14 der Streifenverbundschicht liegen. Insbesondere im Hinblick auf eine Erfassung durch Prüfgeräte können Sicherheitselemente 32a aber auch in anderen Bereichen der Zwischenschicht 30 ausgebildet sein. Ohne weiteres ist es auch möglich unterschiedliche Sicherheitselemente 32a in unterschiedlichen Bereichen der Zwischenschicht 30 anzulegen. Anders als in Fig. 2 angedeutet können die Sicherheitselemente 32a in besonders einfacher Ausführung auch einfach gleichmäßig über die gesamte Zwischenschicht 30 verteilt sein.

Bevorzugt liefern die Sicherheitselemente 32a, 32b und 32c der Überschicht 20 bzw. der Streifenverbundschicht 10 und der Zwischenschicht 30 zumindest einen Effekt, der nur durch eine Kombination von wenigstens Sicherheitselementen 32a, 32b, 32c entsteht und dessen Erkennbarkeit bedeutet, daß zumindest die beteiligten Sicherheitselemente 32a, 32b, 32c sicher vorhanden sind. Mögliche Kombinationseffekte dieser Art sind z.B. Durchsichtsregister, Auflichteffekte oder Durchlichteffekte.

Die Zwischenschicht 30 ist im übrigen grundsätzlich ebenfalls optional und kann entsprechend auch entfallen. Ebenso können aber auch zwei oder mehr Zwischenschichten 30 vorgesehen sein, wobei diese unterschiedliche Sicherheitselemente 32a tragen können.

Die Farbannahmeschicht 40 ist - außerhalb der Ausnehmung 41 - typischerweise opak und wird zweckmäßig aufgedruckt. Sie geht eine besonders gute Verbindung mit aufgebrachten Druckmustern 2a, 2b ein. Die Farbannahmeschicht 40 kann hierzu spezielle Additive enthalten, z.B. Diatomeenerde, enthalten um die Farbannahme zu verbessern. An den gewünschten Stellen, d.h. insbesondere in der Ausnehmung 41, ist die ansonsten opake Farbannalumeschicht 40 vorzugsweise stufenlos ausgespart. In Varianten kann die Farbannahmeschicht 40 auch vollflächig transparent oder teilweise opak und teilweise transparent, insbesondere über den transparenten Streifen 14 der Streifenverbundschicht 10, sein.

Auf die Farbannahmeschicht 40 sind ein, oder wie in Fig. 1 angedeutet, mehrere Druckmuster 2a, 2b drucktechnisch aufgebracht. Bei den Druckmustern kann es sich insbesondere, wie in Fig. 1 angedeutet, um ein Sicherheitsmuster wie ein Guillochenmuster handeln, oder um eine alphanumerische Information, etwa um eine Zahlenangabe. Die Druckmuster 2a, 2b können, wie aus Fig. 2 ersichtlich, übereinander bzw. überlagernd ausgeführt sein, etwa derart, dass auf ein mittels einer ersten Farbe ausgeführtes Guillochenmuster 2b eine mittels einer anderen Farbe ausgeführtes alphanumerische Information 2a aufgebracht wird. Die zur Erzeugung der Druckmuster 2a, 2b eingesetzten Druckfarben ist zweckmäßig auf die Farbannahmeschicht 40 so abgestimmt, dass eine innige Verbindung zwischen Druckmuster 2a, 2b und Farbannahmeschicht 40 entsteht.

In der Farbannahmeschicht 40 ist, wie in Fig. 1 gezeigt, eine Ausnehmung 41 vorgesehen, die im fertigen Blattdokument 1 zusammen mit den weiteren Schichten 10, 20, 30 ein Fenster 3 bildet. Die Ausnehmung 41 ist rechteckförmig und so plaziert, dass sie vollständig über dem mittleren transparenten Streifen 14 der Streifenverbundschicht 10 liegt. Wie aus Fig. 2 ersichtlich liegt die Ausnehmung 41 zweckmäßig genau so, dass die in Richtung der Streifen 12,14,16 verlaufenden Innenränder 43 genau mit den beiden Grenzlinien 13 zwischen des transparenten Streifen 14 fluchten. Auf diese Weise wird der Opazitätsunterschied zwischen dem Fenster 3 und dem angrenzenden Bereich des Blattdokuments 1 verstärkt und der Übergang zwischen dem Fenster 3 und den angrenzenden Teilen des Blattdokuments 1 wird anhand des Kontrast und/ oder Farbunterschiedes klar erkennbar. Die Erkennbarkeit ist so deutlich, dass sie maschinell erfolgen kann. Die Ausnehmung 41 unterbricht die Druckmuster 2a, 2b und gibt in der Ausführungsform nach Fig. 1 den Blick auf in der darunterliegenden Zwischenschicht 30 und/ oder der Überschicht 20 ausgebildete Sicherheitselemente 32a frei. Selbstverständlich kann die Ausnehmung 41 größer dimensioniert sein, so daß sie auch Teile der opaken Streifen 12,16 der Streifenverbundschicht 10 überdeckt bzw. den Blick darauf freigibt. Ebenso können auch mehrere Ausnehmungen 41 vorgesehen sein, die sowohl über dem transparenten Streifen 14 wie über dem opaken Streifen 12,16 der Verbundstreifenschicht angeordnet sein können. Die Kontur der Ausnehmungen 41 ist auch nicht auf Rechteckformen beschränkt, wie in Fig. 1 angedeutet, sondern kann nach Belieben gestaltet sein und etwa eine Wolkenkontur besitzen.

Die Anordnung der Schichten 10, 20, 30, 40 erfolgt, wie besonders aus Fig. 2 ersichtlich, vorzugsweise so, dass die Ausnehmung 41, die Sicherheitselemente 32a, 32b und der transparente Streifen 14 der Streifenverbundschicht genau übereinander liegen, so dass in Aufsicht, wie in Fig. 2 durch den Pfeil angedeutet, ein Fenster 3 entsteht, das für einen Benutzer mit unbewaffnetem Auge als solches erkennbar und als solches nutzbar ist. In bevorzugter Ausführung liegt in dem Fenster 3 zumindest ein Sicherheitselement 32a, 32b, so dass ein Benutzer es unmittelbar prüfen kann.

Während das durch die Ausnehmung 41 gebildete Fenster 3 transparent oder zumindest transluzent erscheint, besitzen die durch die Farbannahmeschicht 40 bedeckten Bereiche des Blattdokuments 1 vor allem dort, wo die Farbannahmeschicht 40 über einem opaken Streifen 12,16 der Streifenverbundschicht 10 liegt, eine besonders hohe Opazität. Da sich Farbannahmeschicht 40 und opake Streifen 12,16 der Streifenverbundschicht 10 in ihrer Opazität verstärken, ergibt sich eine hohe Opazität für diese überlagerten Bereiche bereits bei einer sehr geringen Schichtdicke der Streifenverbundschicht 10. Besonders bei Verwendung als Banknote lässt sich deshalb ein Blattdokument 1 bereitstellen, das bei geringer Dicke H gleichzeitig eine hohe Opazität und ein Fenster 3 aufweist.

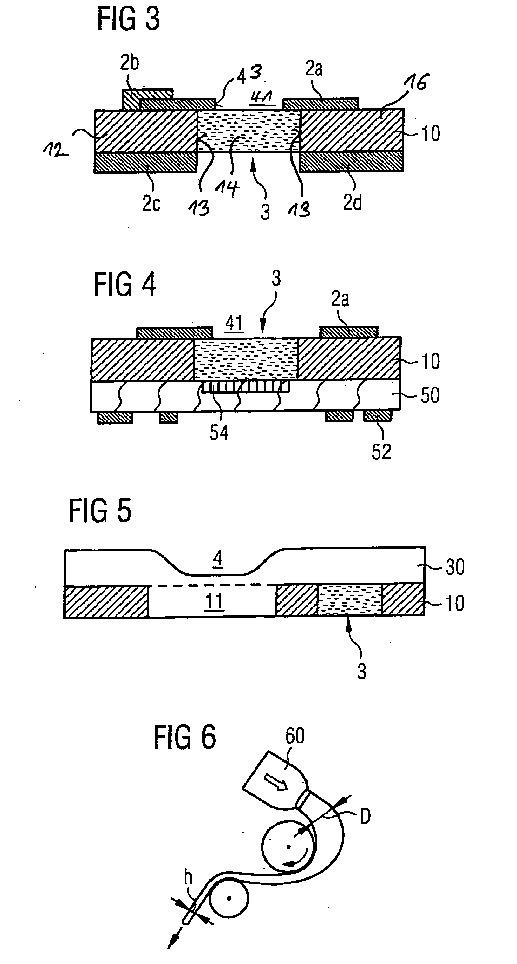

In einer in Fig. 3 veranschaulichten reduzierten Variante zu der in Fig. 1 gezeigten Ausführungsform entfallen Überschichten 20, Zwischenschicht 30 und Farbannahmeschicht 40 und sind auf die Streifenverbundschicht 10 direkt Druckmuster 2a, 2b bzw. 2c, 2d aufgebracht. Durch den Wegfall der genannten Schichten 20, 30, 40 und das Direktaufbringen der Druckmuster 2a, 2b bzw. 2c, 2d auf die Streifenverbundschicht 10 lässt sich die Dicke H des Blattdokuments 1 weiter verringern.

In der Variante nach Fig. 3 wird die Ausnehmung 41 und damit das Fenster 3 durch die Druckmuster 2a, 2b, 2c, 2d definiert. Da sie direkt mit dem Druckmuster 2a, 2b verbunden sind, können die Streifen 12,14,16 der Streifenverbundschicht vorteilhaft auf die Druckmuster 2a, 2b, 2c, 2d abgestimmt werden. Die Abstimmung kann dabei einerseits im Hinblick auf den optischen Gehalt der Druckmusters 2a, 2b, 2c, 2d erfolgen, also im Hinblick auf Farben und Form der Druckmusters 2a, 2b, 2c, 2d. So können etwa opake Streifen 12,16 in Farben ausgeführt sein, die in einem deutlichen Kontrast zu den auf dieses Streifen 12,16 aufgebrachten Teilen der Druckmuster 2a, 2b, 2c, 2d stehen oder die ein gleichartige Farbgebung besitzen.

Darüberhinaus kann die Abstimmung auch so erfolgen, dass z.B. auf bestimmten Streifen 12,14,16 Farben aufgedruckt werden können, die ohne besondere Vorbereitung des Untergrundes nicht ausreichend haften würden. So kann z.B. ein Streifen, etwa der transparente Streifen 14, mit speziellen Zusätzen versehen werden, die es ermöglichen auf den so vorbereiteten Streifen 14 besonders pigmentreiche Farben aufzudrucken; pigmentreiche Farben haften in der Regel wegen ihres hohen Pigmentanteils schlecht.

Desweiteren kann die Lage der durch die Druckmuster 2a, 2b, 2c, 2d geformten Ausnehmungen 41 in Bezug auf die Grenzlinien 13 zwischen den Streifen 12,14,16 variiert werden. Beispielsweise können, wie in Fig. 3 angedeutet, die Innenränder 43 einer Ausnehmung 41 - in Fig. 3 der oberen - etwas über die Grenzlinien 13 vorstehen.

Besonders in den transparenten Streifen 14 können ferner Sicherheitselemente 32a eingebracht sein, die durch die Ausnehmung 41 erkennbar sind.

In weiteren Ausführungsvarianten des in Fig. 1 gezeigten Blattdokuments 1 ist es möglich, über das Druckmuster 2a, 2b eine oder mehrere - nicht gezeigte - weitere Schichten aufzubringen, die z.B. als Schutzschicht dienen. Selbstverständlich können zudem, anders als in den Fig. 1 und 2 angedeutet, die beiden Seiten der Streifenverbundschicht 10 völlig symmetrisch ausgeführt sein. In einer weiteren Variante ist es auch möglich, statt einer zwei oder mehr Streifenverbundschichten 10 zu verwenden, wobei zumindest zwei Streifenverbundschichten 10 zweckmäßig kreuzweise übereinander angeordnet werden, so dass ein definierter, rechteckförmiger, transparenter oder transluzenter Bereich entsteht.

Fig. 4 zeigt eine Ausführungsform eines Blattdokuments, in der ein reduzierter, nur aus Streifenverbundschicht 10 und einem auf die Oberseite direkt aufgebrachten Druckmuster 2a bestehender Schichtenverbund auf eine Trägerschicht 50 aus Papier aufgebracht ist. Die Trägerschicht 50 ist an ihrer in Fig. 4 nach unten weisenden Oberseite mit einem Druckmuster 52 versehen, das ähnlich wie das Druckmuster 2a, 2b eine alphanumerische Information und/ oder ein Sicherheitsmuster bilden kann. Desweiteren weist die Trägerschicht 50 ein Wasserzeichen 54 auf.

Der Schichtenverbund aus Streifenverbundschicht 10 und Druckmuster 2a weist an der Oberseite wiederum ein Fenster 3 auf, das durch Übereinanderlage einer in dem Druckmuster 2a erzeugten Ausnehmung 41 und eines transparenten Streifens 14 gebildet ist. Das Fenster 3 ist über dem Wasserzeichen 54 plaziert, so daß das Wasserzeichen 54 von beiden Seiten des Blattdokuments 1 gut zu erkennen ist. Zugleich weisen die Bereiche außerhalb des Fensters 3 eine besonders gute Opazität auf, so dass hier z.B. auf der Trägerschicht 50 ausgebildete Druckmuster 52 besonders gut wahrnehmbar sind. Anstelle von Wasserzeichen kann das Fenster 3 auch über anderen auf der Trägerschicht 50 ausgebildeten Sicherheitsmerkmalen angeordnet sein, etwa über Sicherheitsfäden oder Bereichen mit fluoreszierenden, phosphoreszierenden oder IR-absorbierenden Elementen. Selbstverständlich können auch mehrere Fenster 3 in unterschiedlichen Größen und Formen vorgesehen sein, die jeweils ein oder mehrere der Sicherheitselemente überdecken bzw. den Blick darauf freigeben. In einer Variante kann die Trägerschicht 50 aus Papier selbst ebenfalls eine auf das Fenster 3 abgestimmte Fensteröffnung aufweisen. Es ist außerdem ohne weiteres möglich die Trägerschicht 50 aus Papier beidseitig mit einem Schichtenverbund aus Streifenverbundschicht 10 und Druckmuster 2a zu kaschieren.

In einer zweckmäßigen Variante der in Fig. 4 gezeigten Ausführungsform sind auf beiden Seiten der Streifenverbundschicht 10 Trägerschichten 50 aus Papier angeordnet, so dass ein symmetrischer Aufbau entsteht; beide Trägerschichten 50 können jeweils mit Druckmustern 52 versehen sein. Eine der Trägerschichten 50 ist über dem Fenster 3 zweckmäßig entsprechend der Ausnehmung 41 ausgeschnitten. Auf der ausgeschnitten Seite oder auch beidseitig ist ferner jeweils eine transparente Zwischenschicht 30 ausgebildet, die im Fenster 3 ein Sicherheitsmerkmal trägt.

In einer weiteren, in Fig. 5 veranschaulichten Ausführungsform des erfindungsgemäßen Blattdokuments kann dieses ferner so modifiziert werden, dass darin neben einem Fenster 3 zusätzlich auch noch ein taktiles Element 4 entsteht. Fig. 5 zeigt einen aus einer Streifenverbundschicht 10 und einer Zwischenschicht 30 bestehenden Schichtenverbund, wobei die Streifenverbundschicht 10 einen opaken Streifen 12 und einen transparenten Streifen 14 aufweist. Der opake Streifen 12 besitzt eine Ausnehmung 11, die z.B. durch Stanzen oder Schneiden eingebracht ist. Die Ausnehmung 11 kann eine beliebige Form besitzen und kann z.B. rund oder rechteckförmig sein. Die in Fig. 5 obenliegende Zwischenschicht 30 ist so aufgebracht, dass sie der Kontur der Streifenverbundschicht 10 durchweg mit zumindest näherungsweise gleichbleibender Dicke folgt. Im Bereich der Ausnehmung 11 bildet die Zwischenschicht 30 dadurch eine Mulde, die als taktiles Element 4 wahrnehmbar ist. Die Ausbildung eines solchen taktilen Elementes 4 lässt sich insbesondere mit der gleichzeitigen Ausbildung eines Fensters 3 kombinieren. Auf das taktile Element 4 lässt sich ohne weiteres anschließend eine Farbannahmeschicht 40 und darauf ein Druckmuster 2, 2a aufbringen.

Fig. 6 zeigt in stark schematisierter Form eine Möglichkeit, um die Dicke einer Streifenverbundschicht 10 nach dem Coextrudieren weiter zu reduzieren. Unmittelbar nach Austritt aus dem Extruder 60 wird die in Form einer Folie vorliegende Streifenverbundschicht hierbei um eine gekühlte Walze 61 gezogen, wodurch die Streifenverbundschicht 10 gestreckt wird und ihre Dicke von einem Anfangswert D auf einen Endwert h abnimmt. Die Größe des Endwertes h hängt dabei maßgeblich von der Drehgeschwindigkeit der Walze 61 ab.

## Patentansprüche

1. Blattdokument mit einer einstückigen, coextrudierten Streifenverbundschicht (10) mit einer Dicke von 10 bis 110 µm, welche in der Fläche aus mindestens zwei verschiedenen Materialien besteht, die in Form von Streifen (12, 14,16) nebeneinander ausgebildet sind, wobei die Streifenverbundschicht (10) zumindest einen transparenten/transluzenten Streifen (14) sowie mindestens einen opaken Streifen (12,16) aufweist, **dadurch gekennzeichnet, dass** auf die Streifenverbundschicht (10) ein Druckmuster (2a, 2b, 2c, 2d) aufgebracht ist, das durch zumindest eine Ausnehmung (41) unterbrochen ist, die wenigstens teilweise über einen transparenten/ transluzenten Streifen (14) liegt und zusammen mit dem nicht überdeckten Bereich des transparenten/transluzenten Streifens (14) ein Fenster (3) bildet, wobei zumindest ein Innenrand (43) der Ausnehmung (41) genau über einer darunterliegenden Grenzlinie (13) zwischen einem transparenten/ transluzenten Streifen (14) und einem opaken Streifen (12,16) liegt, so dass ein klar erkennbarer Übergang zwischen einem transparenten/ transluzenten Bereich des Fensters (3) und einem angrenzenden opaken Bereich entsteht.

2. Blattdokument nach Anspruch 1, **dadurch gekennzeichnet, dass** auf die Streifenverbundschicht (10) eine Farbannahmeschicht (40) aufgebracht ist, die zumindest einen transparenten Bereich bzw. eine Ausnehmung (41) aufweist, der/die wenigstens teilweise über einen transparenten/transluzenten Streifen (14) liegt und zusammen mit dem darunterliegenden bzw. dem nicht überdeckten Bereich des transparenten/transluzenten Streifens (14) ein Fenster (3) bildet und das Druckmuster (2a, 2b) auf die Farbannahmeschicht (40) aufgebracht ist.

3. Blattdokument nach Anspruch 2, **dadurch gekennzeichnet, dass** die Farbannahmeschicht (40)) opak ist.

4. Blattdokument nach der vorhergehenden Ansprüche, **dadurch gekennzeichnet, dass** zwischen Streifenverbundschicht (10) und Farbannahmeschicht (40) und/ oder Druckmuster (2a, 2b, 2c, 2d) eine transparente Zwischenschicht (30) angeordnet ist.

5. Blattdokument nach Anspruch 4, **dadurch gekennzeichnet, dass** die Zwischenschicht (30) ein Sicherheitselement (32a) trägt, dessen Lage auf die Lage des Fensters (3) abgestimmt ist.

6. Blattdokument nach einem der vorhergehenden Ansprüche, **dadurch gekennzeichnet, dass** auf mindestens einer Seite der Streifenverbundschicht (10) eine Überschicht (20) ausgebildet ist.

7. Blattdokument nach einem der vorhergehenden Ansprüche, **dadurch gekennzeichnet, dass** in einem opaken Streifen (12,16) der Streifenverbundschicht (10) eine Ausnehmung (11) ausgebildet ist, die ein taktiles Element bildet.

8. Blattdokument nach einem der vorhergehenden Ansprüche, **dadurch gekennzeichnet, dass** ein Streifen (12,14,16) der Streifenverbundschicht ein Sicherheitselement trägt.

9. Blattdokument nach einem der vorhergehenden Ansprüche, **dadurch gekennzeichnet, dass** es zwei Streifenverbundschichten (10) aufweist, die kreuzweise übereinander angeordnet sind.

## Claims

1. A sheet document having a one-pieced, coextruded composite strip layer (10) having a thickness of 10 to 110 µm, which consists over its area of at least two different materials that are configured side by side in the form of strips (12, 14, 16), wherein the composite strip layer (10) has at least one transparent/translucent strip (14) as well as at least one opaque strip (12, 16), **characterized in that** on the composite strip layer (10) there is applied a printed pattern (2a, 2b, 2c, 2d) that is interrupted by at least one recess (41) that lies at least partly above a transparent/translucent strip (14) and together with the non-covered region of the transparent/translucent strip (14) forms a window (3), wherein at least an inner edge (43) of the recess (41) lies exactly above a subjacent borderline (13) between a transparent/translucent strip (14) and an opaque strip (12, 16), so that a clearly recognizable transition between a transparent/translucent region of the window (3) and a bordering opaque region arises.

2. The sheet document according to claim 1, **characterized in that** on the composite strip layer (10) there is applied an ink-receiving layer (40) that has at least one transparent region or one recess (41) that lies at least partly above a transparent/translucent strip (14) and together with the subjacent or the non-covered region of the transparent/translucent strip (14) forms a window (3) and the printed pattern (2a, 2b) is applied on the ink-receiving layer (40).

3. The sheet document according to claim 2, **characterized in that** the ink-receiving layer (40) is opaque.

4. The sheet document according to any of the preceding claims, **characterized in that** a transparent intermediate layer (30) is arranged between composite strip layer (10) and ink-receiving layer (40) and/or printed pattern (2a, 2b, 2c, 2d).

5. The sheet document according to claim 4, **characterized in that** the intermediate layer (30) carries a security element (32a), whose position is coordinated to the position of the window (3).

6. The sheet document according to any of the preceding claims, **characterized in that** an overlayer (20) is configured on at least one side of the composite strip layer (10).

7. The sheet document according to any of the preceding claims, **characterized in that** a recess (11) is configured in an opaque strip (12, 16) of the composite strip layer (10), which recess forms a tactile element.

8. The sheet document according to any of the preceding claims, **characterized in that** a strip (12, 14, 16) of the composite strip layer carries a security element.

9. The sheet document according to any of the preceding claims, **characterized in that** it has two composite strip layers (10) that are arranged crosswise one above the other.

## Revendications

1. Document de type feuille ayant une couche composite à rubans (10) coextrudée d'un seul tenant épaisse de 10 à 110 µm qui, en sa surface, consiste en au moins deux matériaux différents réalisés sous forme de rubans (12, 14, 16) juxtaposés, la couche composite à rubans (10) comportant au moins un ruban (14) transparent/translucide ainsi qu'au moins un ruban (12, 16) opaque, **caractérisé en ce que** , sur la couche composite à rubans (10), un motif imprimé (2a, 2b, 2c, 2d) est appliqué, lequel est interrompu par au moins un évidement (41) situé au moins partiellement par-dessus un ruban (14) transparent/translucide et constitue en association avec la zone du ruban (14) transparent/translucide non recouverte une fenêtre (3), au moins un bord intérieur (43) de l'évidement (41) se trouvant exactement au-dessus d'une ligne limite (13) sous-jacente entre un ruban (14) transparent/translucide et un ruban (12, 16) opaque, de telle sorte qu'une transition clairement reconnaissable entre une zone transparente/translucide de la fenêtre (3) et une zone adjacente est engendrée.

2. Document de type feuille selon la revendication 1, **caractérisé en ce que**, par-dessus la couche composite à rubans (10), une couche de réception d'encre (40) est appliquée, laquelle comporte au moins une zone transparente ou un évidement (41) situé(e) au moins partiellement par-dessus un ruban (14) transparent/translucide et constituant, en association avec la zone sous-jacente ou non recouverte du ruban (14) transparent/translucide, une fenêtre (3), et **en ce que** le motif imprimé (2a, 2b) est appliqué sur la couche de réception d'encre (40).

3. Document de type feuille selon la revendication 2, **caractérisé en ce que** la couche de réception d'encre (40) est opaque.

4. Document de type feuille selon une des revendications précédentes, **caractérisé en ce que**, entre la couche composite à rubans (10) et la couche de réception d'encre (40) et/ou le motif imprimé (2a, 2b, 2c, 2d), une couche intermédiaire (30) transparente est agencée.

5. Document de type feuille selon la revendication 4, **caractérisé en ce que** la couche intermédiaire (30) porte un élément de sécurité (32a) dont la position correspond à la position de la fenêtre (3).

6. Document de type feuille selon une des revendications précédentes, **caractérisé en ce que**, sur au moins une face de la couche composite à rubans (10), une surcouche (20) est réalisée.

7. Document de type feuille selon une des revendications précédentes, **caractérisé en ce que**, dans un ruban opaque (12, 16) de la couche composite à rubans (10), un évidement (11) constituant un élément tactile est réalisé.

8. Document de type feuille selon une des revendications précédentes, **caractérisé en ce qu'**un ruban opaque (12, 14, 16) de la couche composite à rubans porte un élément de sécurité.

9. Document de type feuille selon une des revendications précédentes, **caractérisé en ce qu'**il comporte deux couches composites à rubans (10) qui sont agencées en croix l'une sur l'autre.
